Europäisches Patentamt

European Patent Office

Office européen des brevets

(11) Veröffentlichungsnummer: **0 248 448**
**A1**

## (12) EUROPÄISCHE PATENTANMELDUNG

(21) Anmeldenummer: 87108202.0

(22) Anmeldetag: 05.06.87

(51) Int. Cl.⁴: **H02M 1/084** , **H02M 5/257**

(30) Priorität: 06.06.86 DE 3619040

(43) Veröffentlichungstag der Anmeldung:
09.12.87 Patentblatt 87/50

(84) Benannte Vertragsstaaten:
CH DE FR GB IT LI

(71) Anmelder: MSI Technik GmbH
Leinfeld 17
D-8110 Seehausen(DE)

(72) Erfinder: Nistor, Dan, Dipl.-Ing.
Bahnhofsweg 2
D-8110 Hechendorf(DE)

(74) Vertreter: Liska, Horst, Dr. et al
Patentanwälte H. Weickmann, Dr. K. Fincke,
F.A. Weickmann, B. Huber, Dr. H. Liska, Dr. J.
Prechtel Möhlstrasse 22 Postfach 86 08 20
D-8000 München 86(DE)

(54) Mehrphasen-Anschnittsteuerung.

(57) Die Mehrphasen-Anschnittsteuerung hat durch
Zündimpulse triggerbare Wechselstromventile (5) in
jedem der Phasenstränge (U, V, W). Durch einen
Nulldurchgangsdetektor (11) triggerbare
Verzögerungsmittel (10) lösen nach Ablauf einer vorbestimmten Verzögerungszeit eine insbesondere als
Mikroprozessor oder Mikrokontroller ausgebildete
Steuerschaltung (9) aus, die daraufhin aus einem
Tabellenspeicher (15) mit vorbestimmter Wortfolgeperiode aufeinanderfolgende Datenwörter ausliest,
von denen jedes Datenwort Informationen über
gleichzeitig zu erzeugende logische Pegel von
Zündimpulssignalen für sämtliche Phasenstränge
enthalten. Die Wortfolgeperiode ist kleiner als die
Phasenverschiebung der Zündimpulse zwischen den
Phasensträngen. Die Zündimpulssignale werden
abhängig von Bitstellen-Informationen der
Datenwörter parallel erzeugt. Es sind keine
zusätzlichen Verzögerungsmittel zur Festlegung der
Phasenverschiebung zwischen zeitlich aufeinanderfolgenden Zündimpulsen erforderlich.

FIG.1

## Mehrphasen-Anschnittsteuerung

Die Erfindung betrifft eine Mehrphasen-Anschnittsteuerung, mit einem durch Zündimpulse triggerbaren Wechselstromventil in jedem von mehreren, gegeneinander phasenverschobene Wechselspannungen führenden Phasensträngen, mit einem auf Nulldurchgänge der Wechselspannung eines der Phasenstränge ansprechenden Nulldurchgangsdetektor, mit insbesondere digitalen, durch den Nulldurchgangsdetektor triggerbaren Verzögerungsmitteln und mit einer bei Ablauf der durch die Verzögerungsmittel festgelegten Verzögerungszeit entsprechend der Phasenverschiebung der Wechselspannungen gegeneinander phasenverschobene Zündimpulse an die Wechselstromventile abgebenden Steuerschaltung.

Bei Phasenanschnittsteuerungen, wie sie beispielsweise aus Eugen Philippow "Taschenbuch Elektrotechnik", Band 5, Carl Hanser Verlag, München, Wien, 1981, Seiten 931 bis 933 bekannt sind, wird der das beispielsweise als Thyristor ausgebildete Wechselstromventil triggernde Zündimpuls von einer Verzögerungsschaltung erzeugt, die ihrerseits von einem auf Nulldurchgänge des Wechselstromsignals ansprechenden Nulldurchgangsdetektor ausgelöst wird. Die Verzögerungsschaltung liefert den Zündimpuls jeweils nach einer vorbestimmten Verzögerungszeit auf den Nulldurchgang der Wechselspannung folgend. Bei der Verzögerungsschaltung kann es sich um eine Digitalschaltung, beispielsweise in form eines Taktimpulse zählenden, voreinstellbaren Zählers handeln.

Bei dieser Mehrphasen-Anschnittsteuerung werden lediglich die Zündimpulse für das Wechselstromventil eines von mehreren Phasenträgern in der vorstehend erläuterten Weise erzeugt. Die Zündimpulse für die Wechselstromventile der übrigen Phasenstränge haben eine konstante, durch die Phasenverschiebung der Wechselspannungen vorgegebene gegenseitige Phasenverschiebung und werden mit Hilfe von Verzögerungsgliedern, beispielsweise Schieberegistern, erzeugt, die den von der Verzögerungsschaltung erzeugten Zündimpuls entsprechend der Phasenverschiebung der Wechselspannungen zeitlich verzögern. Mehrphasen-Anschnittsteuerungen dieser Art sind vergleichsweise aufwendig und erfordern eine Vielzahl diskreter Komponenten. Dies ist insbesondere dann unerwünscht, wenn die Verzögerungszeit durch einen Mikroprozessor oder Mikrokontroller gesteuert werden soll und diese diskreten Baukomponenten zusätzlich bereitgestellt werden müssen.

Es ist Aufgabe der Erfindung, eine Mehrphasen-Anschnittsteuerung anzugeben, die es erlaubt, mehrere gegeneinander zeitlich versetzte Zündimpulse für die Wechselstromventile in den einzelnen Phasensträngen mit vergleichsweise geringem konstruktivem Aufwand zu erzeugen. Die Mehrphasen-Anschnittsteuerung soll sich insbesondere auf der Grundlage eines Mikroprozessors oder Mikrokontrollers oder dergl. realisieren lassen, ohne daß für die Phasenverschiebung der den einzelnen Phasensträngen zugeordneten Zündimpulse untereinander zusätzlicher externer Zeitverzögerungsglieder oder dergl. benötigt werden.

Diese Aufgabe wird erfindungsgemäß dadurch gelöst, daß die Steuerschaltung einen Speicher aufweist, in welchem Datenwörter gespeichert sind, die jeweils Informationen über gleichzeitig zu erzeugende logische Pegel von Zündimpulssignalen sämtlicher Phasenstränge enthalten und daß die Steuerschaltung die Datenwörter aufeinanderfolgend mit einer Wortfolgeperiode, die kleiner ist als die Phasenverschiebung der Zündimpulse zwischen den Phasensträngen aus dem Speicher ausliest und die Zündimpulssignale entsprechend den Informationen des jeweils ausgelesenen Datenworts parallel erzeugt.

Die insbesondere als Mikroprozessor oder Mikrokontroller ausgebildete Steuerschaltung erzeugt an ihren Zündimpulsausgängen innerhalb aufeinanderfolgender Wortfolgeperioden mehrere Signale gleichzeitig, deren logische Pegel den Informationen in dem jeweils zuletzt aus dem Speicher ausgelesenen Datenwort entsprechen. Die Steuerschaltung hält die Pegel bis zum Auslesen des jeweils nächsten Datenworts. Auf diese Weise werden die Steuerimpulspegel entsprechend den sukzessive ausgelesenen Datenwörtern im Echtzeitbetrieb gleichzeitig aktualisiert. Außer den eingangs erläuterten Verzögerungsmitteln, die die Verzögerungszeit eines der Zündimpulse relativ zum Nulldurchgang der Wechselspannung in dem durch diesen Zündimpuls gesteuerten Phasenstrang festlegen, sind keine zusätzlichen Verzögerungsmittel für die Zündimpulse der übrigen Phasenstränge erforderlich. Die Verzögerungszeiten werden durch die Informationen der in Tabellenform im Speicher gespeicherten Datenwörter sowie durch die Taktfrequenz des Lesetaktes bestimmt.

In einer zweckmäßigen Ausgestaltung ist die Anzahl der Bitstellen jedes der Datenwörter gleich oder auch größer als die Zahl der parallel zu erzeugenden Zündimpulssignale. Die logischen Pegel der einzelnen Zündimpulssignale sind hierbei durch die Informationen aus jeweils zugeordneten Bitstellen der Datenwörter festgelegt. Durch diese Maßnahme entfallen Umcodierungen, un die Informationen der einzelnen Bitstellen der Datenwörter können unmittelbar den Steuerimpulsausgängen zugeführt werden.

In einer insbesondere für durch einen Mikroprozessor oder Mikrokontroller gesteuerte Ausführungsformen geeigneten Version erzeugt die Steuerschaltung in jedem Phasenstrang mit der halben Periode der Wechselspannung aufeinanderfolgende Zündimpulse. Die von der Steuerschaltung aufeinanderfolgend aus dem Speicher ausgelesenen Datenwörter enthalten dementsprechend Informationen über die logischen Pegel der Zündimpulssignale eiiner halben Periode der Wechselspannung. Das erste nach Ablauf der Verzögerungszeit des Verzögerungsmittels aus dem Speicher ausgelesene Datenwort hat für den vom Nulldurchgangsdetektor überwachten Phasenstrang eine den Zündimpuls dieses Phasenstrangs bereitstellende Information. Durch diese Maßnahmen wird sichergestellt, daß der Mikroprozessor oder Mikrokontroller nur während einer Teilperiode der Wechselspannung mit Datenleseroutinen und Zündimpulsausgaberoutinen belegt ist, also während des restlichen Periodenteils für weitere Aufgaben, beispielsweise Regelungsaufgaben und dergl., zur Verfügung steht.

Im folgenden soll ein Ausführungsbeispiel der Erfindung anhand von Zeichnungen näher erläutert werden. Es zeigt:

Fig. 1 ein Blockschaltbild einer Dreiphasen-Anschnittsteuerung und

Fig. 2a bis 2g Zeitdiagramme zur Erläuterung der Wirkungsweise der Schaltung nach Fig. 1.

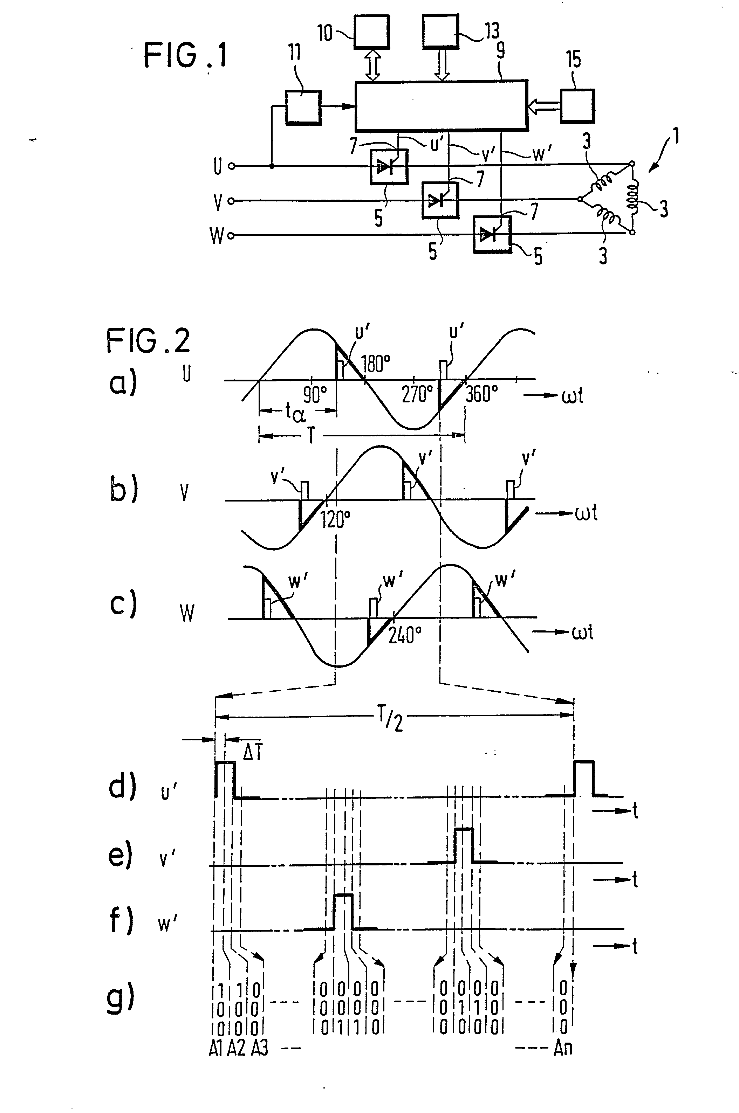

Fig. 1 zeigt einen Drehstromverbraucher 1, beispielsweise einen Drehstrommotor, dessen Wicklungen 3 über Wechselstromventile 5 an Phasensträngen U, V, W eines Drehstromnetzes angeschlossen sind. Der Verbraucher 1 ist in Dreieckschaltung angeschlossen, kann jedoch auch in Sternschaltung mit dem Drehstromnetz verbunden sein. Die Wechselstromventile 5 sind herkömmlich, beispielsweise als Thyristorschalter ausgebildet und werden über Zündimpulse an ihren Zündeingängen 7 gezündet und herkömmlich, beispielsweise beim jeweils nächsten Nulldurchgang der Strangspannung gelöscht. Die Wechselstromventile 5 sind in Fig. 1 lediglich schematisch dargestellt, erlauben jedoch eine bipolare Steuerung der Wechselspannung. Die Steuerschaltung 9 erfaßt mittels eines Nulldurchgangsdetektors den einer vorbestimmten Halbperiode, beispielsweise der positiven Periode, vorangehenden Nulldurchgang der Strangspannung U und löst Verzögerungsmittel 10 aus, die nach Ablauf einer vorbestimmten Verzögerungszeit $t_\alpha$ die Steuerschaltung 9 zur Ausgabe eines das Wechselstromventil 5 des Phasenstrangs U zündenden Zündimpulses u' veranlassen. Die Steuerschaltung 9 ist als Mikroprozessor, vorzugsweise als Mikrokontroller ausgebildet. Die Verzögerungsmittel sind als externes, mit dem Mikrokontroller zusammenwirkendes Zeitglied in Form eines Timers oder eines Taktimpulse des Mikrokontrollers zählenden, voreinstellbaren Zählers ausgebildet. Die Verzögerungsmittel können aber auch durch eine Zeitmeßroutine des Mikrokontrollers realisiert werden. Die Größe der Verzögerungszeit $t_\alpha$ ist durch Einstellmittel 13, bei welchen es sich um Stellglieder, aber auch um Regelkreise oder dergl. handeln kann, änderbar. Die Steuerschaltung 9 erzeugt den Zündimpuls u' und darüber hinaus Zündimpulse v' und w' für die Wechselstromventile der Phasenstränge V und W abhängig von in einem Speicher 15 gespeicherten Informationen. Die Phasenverschiebung zwischen den Zündimpulsen u' und v' sowie v' und w' ist jeweils gleich der Phasenverschiebung zwischen den Strangspannungen U and V sowie V und W.

Die Fig. 2a bis c zeigen Sachverhalt im einzelnen. Mit dünn gezeichneten Linien ist die Wechselspannung am Eingang der Wechselstromventile 5 dargestellt, mit dick gezeichneten Linien ist die dem Verbraucher 1 zugeführte Ausgangsspannung der Wechselstromventile 5 gezeichnet. Fig. 2a zeigt zugleich die Verzögerungszeit $t_\alpha$ zwischen dem vom Nulldurchgangsdetektor 11 erfaßten Nulldurchgang der Strangspannung U und dem jeweils nächstfolgenden Zündimpuls u'. Die Zündimpulse u' folgen mit der Halbperiode T/2 der Strangspannungsperiode T aufeinander. Die Strangspannungen U, V und W sind um 120° gegeneinander versetzt. Dementsprechend folgen auch die Zündimpulse v' mit einer Phasenverzögerung von 120° auf die Zündimpulse u'. Die Zündimpulse w' haben ihrerseits eine Phasenverzögerung von 120° bezogen auf die Zündimpulse v'.

Der Speicher 15 speichert n Datenworte A1 bis An, von denen jedes zumindest 3 Bitstellen hat. Der logische Pegel des Zündimpulssignals an jeden der Zündimpulsausgänge wird durch den logischen Pegel einer zugeordneten Bitstelle jedes der Datenwörter festgelegt. Die Steuerschaltung 9 liest die Datenwörter mit einer Wortfolgerperiode $\Delta T$ aus dem Speicher 15 aus, die gleich T/2n ist. Innerhalb jeder Wortfolgesperiode wird der Ausgangspegel an den Zündsignalausgängen durch die Bitstellen-Information der Datenwörter festgelegt, wie dies in den Fig. 2d bis 2g dargestellt ist. Fig. 2g zeigt in Spalten übereinander die Bitstellen-Informationen der Datenwörter A1 bis An für aufeinanderfolgende Wortfolgeperioden. Im dargestellten Ausführungsbeispiel hat das erste, unmittelbar auf den Ablauf der Verzögerungszeit $t_\alpha$ folgende Datenwort A1 die Informationen 1-0-0. Dementspre-

chend hat das Zündimpulssignal u′ einen das Wechselstromventil 5 des Phasenstrangs U zündenden Eins-Pegel, während die Zündimpulsignale v′ und w′ Nullpegel haben. Die Informationen der Datenwörter bestimmen nicht nur die Phasenverschiebung zwischen den Zündimpulsen, sondern auch die Dauer der einzelnen Zündimpulse. Der Speicher 15 kann als Festwertspeicher ausgebildet sein und speichert in Tabellenform lediglich die Zündimpulse für eine halbe Periode der Wechselspannung, beginnend mit dem Zündimpuls u′ in dem vom Nulldurchgangsdetektor 11 überwachten Phasenstrang U. Um Zündimpulse für die zweite Halbwelle zu erzeugen, wird der Speicher 15 zweifach gelesen.

**Ansprüche**

1. Mehrphasen-Anschnittsteuerung, mit einem durch Zündimpulse triggerbaren Wechselstromventil (5) in jedem von mehreren, gegeneinander phasenverschobene Wechselspannungen führenden Phasensträngen (U, V, W), mit einem auf Nulldurchgänge der Wechselspannung eines der Phasenstränge ansprechenden Nulldurchgangsdetektor (11), mit insbesondere digitalen, durch den Nulldurchgangsdetektor (11) triggerbaren Verzögerungsmitteln und mit einer bei Ablauf der durch die Verzögerungsmittel festgelegten Verzögerungszeit $(t_\alpha)$ entsprechend der Phasenverschiebung der Wechselspannungen gegeneinander phasenverschobene Zündungsimpulse (u′, v′, w′) an die Wechselstromventile (5) abgebenden Steuerschaltung (9),
dadurch **gekennzeichnet,** daß die Steuerschaltung (9) einen Speicher (15) aufweist, in welchem Datenwörter (A1-An) gespeichert sind, die jeweils Informationen über gleichzeitig zu erzeugende logische Pegel der Zündimpulssignale (u′, v′, w′) sämtlicher Phasenstränge (U, V, W) enthalten, und daß die Steuerschaltung (9) die Datenwörter (A1-An) aufeinanderfolgend mit einer Wortfolgeperiode ($\Delta T$), die kleiner ist als die Phasenverschiebung der Zündimpulse (u′, v′, w′) zwischen den Phasensträngen (U, V, W) aus dem Speicher (15) ausliest und die Zündimpulssignale (u′, v′, w′) entsprechend den Informationen des jeweils ausgelesenen Datenworts parallel erzeugt.

2. Anschnittsteuerung nach Anspruch 1, dadurch **gekennzeichnet,** daß die Anzahl der Bitstellen jedes der Datenwörter (A1-An) gleich oder größer ist als die Zahl der parallel zu erzeugenden Zündimpulssignale (u′, v′, w′) und daß die logischen Pegel der einzelnen Zündimpulssignale (u′, v′, w′) durch die Informationen aus jeweils zugeordneten Bitstellen der Datenwörter (A1-An) festgelegt sind.

3. Anschnittsteuerung nach Anspruch 1 oder 2, dadurch **gekennzeichnet,** daß die von der Steuerschaltung (9) aufeinanderfolgend aus dem Speicher (15) ausgelesenen Datenwörter (A1-An) Informationen über die logischen Pegel der Zündimpulssignale (u′, v′, w′) einer halben Periode der Wechselspannung enthalten, und daß das erste nach Ablauf der Verzögerungszeit $(t_\alpha)$ der Verzögerungsmittel aus dem Speicher (15) ausgelesene Datenwort (A1) eine den Zündimpuls (u′) für den vom Nulldurchgangsdetektor (11) überwachten Phasenstrang (U) repräsentierende Information beinhaltet.

0 248 448

FIG .1

FIG .2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 067 030 (THE EXPRESS LIFT) <br> * Seite 1, Zeile 66 - Seite 2, Zeilen 2, 36 und folgende * | 1-3 | H 02 M 1/084 <br> H 02 M 5/257 |
| | --- | | |
| Y | PT/ELEKTROTECHNIEK/ELECTRONICA, Band 40, Nr. 2, Februar 1985, Seiten 61-68, Rijswijk, NL; H. MIYNARENDS "Constructive van elektrische machines" <br> * Seite 66, mittlere Spalte, letzter Absatz und Fortsetzung rechte Spalte; Figur 16 * | 1 | |
| | --- | | |
| Y | EP-A-0 083 866 (TEXAS INSTRUMENTS) <br> * Seite 2, Zeile 24 - Seite 3, Zeile 25; Seite 6, Zeile 6 - Seite 8, Zeile 10 * | 1 | |
| | --- | | **RECHERCHIERTE SACHGEBIETE (Int. Cl.4)** |
| A | ELECTRONIC DESIGN, Band 32, Nr. 2, 26. Januar 1984, Seiten 162, 164, 166; "Mu-C based firing circuit controls three-phase inverter" <br> * ganzes Dokument * | 1 | H 02 M 1/00 <br> H 02 M 5/00 <br> H 02 P 7/00 |
| | --- | | |
| A | EP-A-0 082 558 (N.V. PHILIPS) <br> * Seite 13, Zeile 20 - Seite 20, Zeile 20 * | 1 | |
| | ----- | | |

Der vorliegende Recherchenbericht wurde für alle Patentansprüche erstellt.

| Recherchenort <br> BERLIN | Abschlußdatum der Recherche <br> 31-07-1987 | Prüfer <br> GESSNER E A F |
|---|---|---|